# EUROPEAN PATENT SPECIFICATION

(11) **EP 3 748 585 B1**
(45) Date of publication and mention of the grant of the patent: **13.08.2025**
(21) Application number: 19178374.5
(22) Date of filing: 05.06.2019
(51) Int. Cl.: G06T 19/00, A63F 13/00

(54) **METHOD FOR FAST RENDERING OF VERY LARGE 3D MODELS**
VERFAHREN ZUM SCHNELLEN RENDERN VON SEHR GROSSEN 3D-MODELLEN
PROCÉDÉ DE RENDU RAPIDE DE TRÈS GRANDS MODÈLES 3D

(43) Date of publication of application: 09.12.2020
(73) Proprietor: My Virtual Reality Software AS, 0152 Oslo (NO)
(72) Inventor: BRENNA, Roy Morten, 3943 Porsgrunn (NO); LØVLI, Viggo, 3616 Kongsberg (NO)
(74) Representative: Kaminski Harmann

(56) References cited:
- US-B2- 7 256 779
- SÉBASTIEN LAGARDE ET AL: "Local Image-based Lighting With Parallax-corrected Cubemap", POWERPOINT SLIDES OF TALK ON SIGGRAPH CONFERENCE 2012, 10 August 2012 (2012-08-10), Los Angeles, CA, USA, pages 1 - 55, XP055615830, Retrieved from the Internet <URL:https://seblagarde.files.wordpress.com/2012/08/parallax_corrected_cubemap-siggraph2012.pdf> [retrieved on 20190827]
- ANONYMOUS: "Stream Sublevels with C++ - Unreal", 1 January 2016 (2016-01-01), XP055615784, Retrieved from the Internet <URL:http://docs.manew.com/ue4/592.html> [retrieved on 20190827]

## Description

The present invention pertains to an improved computer-implemented method and computer system for visualizing environments with three-dimensional models of very large structures having many and detailed features on a display, at the same time allowing a user of the computer system to move a viewpoint (virtual camera) through the environment without restrictions.

Runtime rendering three-dimensional (3D) scenes is known in the art and used for many applications. If the rendering includes structures comprising detailed features such as 3D components, known methods have the disadvantage that the speed of rendering the environment and structure is reduced depending of the amount of features and their desired level of detail. Thus, if the amount of detailed content rises toward infinite then the performance of a runtime rendering environment will degrade toward a halt.

Some prior art solutions exist that use cube maps to represent a two-dimensional (2D) background in 3D scenes, thus reducing the number of features to be rendered at the same time. For instance, it is known to pre-render cube maps with colour and depth information, wherein one cube map is rendered per scene area, and a transition between cube maps changes the scene. Although in these solutions the camera may be able to rotate, the camera position is static, i.e. always in centre of the cube map. Solutions known from prior art, also comprising so-called street-view applications, either do not allow a free movement through the rendered environment or do not provide a realistic view of the background of the 3D structure.

Sébastien Lagarde et al: "Local Image-based Lighting With Parallax-corrected Cubemap", PowerPoint Slides of Talk on Siggraph Conference 2012, 10 August 2012, discloses the use of parallax-corrected cube maps for providing lighting effects in computer games. US 7,256,779 B2 discloses using cube maps for providing three-dimensionality to pre-rendered scenes in video gaming.

For instance, in case of a fire at a large structure such as a refinery complex it would be advantageous for the fire brigade to be able to familiarize themselves with the structure in general and certain effected parts of it in particular before and during an operation.

It would therefore be desirable to have a method and system available that avoid the problems of the prior art and are able to display a complete extensive scene at any given time, where highly detailed features around a viewpoint are visualized, and where the viewpoint can be moved freely through the scene without any delays. It would also be desirable to have such a method and system available that work with established and widespread graphics-processing units (GPU) and even on common mobile devices.

It is therefore an object of the present invention to provide an improved method for visualizing 3D models of large structures comprising a large amount of features to be visualized.

It is another object to provide such a method that enables a user to move a camera viewpoint freely and continuously through the visualization.

It is another object, to provide such a method that provides a realistic view, both, on the structure as a whole as well as on distinct portions of the structure with a high level of detail.

It is another object, to provide such a method that reduces the time for rendering and reduces the needed computing capacity on the rendering device.

In particular, it is an object to provide such a method, wherein a detail-rich 3D horizon with infinite size is displayed in a synthetic 3D environment as quickly as possible during start-up and during execution of a runtime rendering application on desktop and mobile devices.

It is another object of the invention to provide a computer system and a computer programme product for executing said method.

At least one of these objects is achieved by the method according to claim 1, the computer system according to claim 13 and/or the dependent claims of the present invention.

The invention relates to a computer-implemented method for visualizing a 3D model of a large structure, the structure comprising a large amount of features to be visualized, the method comprising
- generating a multitude of virtual 3D horizon objects, wherein the horizon objects are positioned and sized so that each horizon object overlaps with at least one neighbouring horizon object; and
- performing a rendering process for providing a visualization of the model from a multitude of viewpoints to a user and for enabling the user to move a current viewpoint freely through the visualization of the model.

Each horizon object comprises an inner space, a movement space, metadata and model data. The inner space surrounds a centre point. The movement space is inside the inner space, smaller than the inner space and overlaps with or adjoins a movement space of at least one neighbouring horizon object. The metadata comprises at least a 3D position of the centre point relative to the 3D model and a distance from the centre point to the boundaries of the inner space. The model data is related to features of the 3D model and comprises a 3D geometry of nearby features, wherein nearby features are those features of the model that are positioned at least partially in the inner space of the horizon object.

The rendering process comprises:
- providing an input device for the user, allowing the user to select a current viewpoint and to change the current viewpoint using the input device, particularly in six degrees of freedom (6DOF); and
- visualizing, for a first current viewpoint, a first horizon object which movement space comprises the first current viewpoint, wherein visualizing the first horizon object comprises
   - rendering the 3D geometry of nearby features, and
   - using a 3D cube map or a 3D point cloud for displaying a 3D representation of distant features, wherein distant features are those features of the model that are not positioned in the inner space of the first horizon object, wherein the cube map at least comprises image textures with colour, lighting and depth information, and the point cloud at least comprises coordinates and colour information for each point of the point cloud.

The rendering process moreover comprises monitoring whether the current viewpoint is changed by the user in such a way that the current viewpoint reaches or passes a movement boundary of the movement space of the first horizon object, wherein, if the current viewpoint reaches or passes the movement boundary, a second horizon object is visualized, wherein the movement space of the second horizon point comprises the current viewpoint.

If the 3D cube map is used for displaying the 3D representation of distant features, a size of the horizon objects is selected in dependence of a performance of a computer system used for performing the method, and/or the horizon objects comprise an outer space surrounding the inner space, wherein a size of the inner space of the horizon objects is selected in dependence of a performance of the computer system used for performing the method.

The large structure represented by the 3D model for instance may comprise a large complex of buildings or other artificial structures, such as power plants, refineries or manufacturing plants, large vessels such as naval or merchant ships, or large infrastructure facilities such as airports or commercial harbours.

According to one embodiment of the method, each horizon object comprises a 3D cube map comprising image textures with colour, lighting and depth information, wherein the cube map is used for displaying the representation of the distant features, wherein the rendering process comprises generating a parallax effect to recreate 3D positions in the visualization of the horizon object from 2D positions of the cube map.

In one embodiment, the rendering process comprises
- performing rasterization to interpolate the 3D geometry into one fragment per pixel to be displayed, and
- performing ray marching for each fragment using the depth information of the cube map, wherein generating the parallax effect is based on a result of the ray marching.

In particular, the rendering process further comprises
- adding colour information from the image textures, based on a result of the ray marching, and
- processing the 3D positions, the colour information and the lighting information to display a pixel on a screen with correct light, shadow and colour.

According to another embodiment of the method, a 3D point cloud is used for displaying the representation of the distant features, the point cloud comprising coordinates and colour information for each point of the point cloud, particularly wherein points of the point cloud lying in the inner space are not displayed.

In one embodiment, the same point cloud is used for the first and the second horizon object, particularly wherein the point cloud comprises an octree level-of-detail distribution.

In another embodiment, the point cloud comprises texture information for each point of the point cloud, particularly wherein
- the points of the point cloud are texture pixels, and/or
- the texture information is derived from image textures of a 3D cube map of the horizon object.

According to another embodiment of the method, the horizon object is cubical, wherein the inner space and the movement space are three-dimensional, particularly also cubical.

According to another embodiment of the method,
- horizon object data of a plurality of horizon objects is stored in a data storage, the horizon object data comprising at least the 3D cube map or point cloud and the metadata of each of the plurality of horizon objects; and
- the rendering process comprises loading the horizon object data of one or more of the plurality of horizon objects from the data storage.

According to another embodiment of the method, the horizon objects are positioned and sized depending on a distribution of features in the 3D model, particularly to achieve or approximate an even distribution of the nearby features for every horizon object, particularly wherein the method comprises defining a multitude of anchor viewpoints within the model and generating one virtual 3D horizon objects for each anchor viewpoint, particularly wherein the centre point corresponds to the anchor viewpoint.

According to another embodiment of the method, the three-dimensional model comprises outdoor and indoor parts, the indoor parts comprising features inside buildings or inside (e.g. hollow) 3D features of the model, wherein generating the horizon objects comprises generating outdoor horizon objects for the outdoor parts and indoor horizon objects for the indoor parts.

According to another embodiment of the method,
- a size of the movement space of a first horizon object is selected in dependence of distances to the neighbouring horizon objects; and/or
- a form of the movement space of a first horizon object is selected in dependence of a spatial distribution of neighbouring horizon objects.

According to another embodiment of the method, a size of the horizon objects is selected in dependence of a performance of a computer system used for performing the method. According to another embodiment of the method, the horizon objects comprise an outer space (or a part of an outer space) surrounding the inner space, wherein a size of the inner space of the horizon objects is selected in dependence of a performance of the computer system used for performing the method, particularly wherein the absolute size of the inner space or a size of the inner space relative to a size of the respective horizon object is selected. Said performance in particular is at least partially a performance of a graphics processing unit (GPU) of the computer system.

The invention also pertains to a computer system comprising a data storage, a GPU, input means and a display, wherein the computer system is configured for performing the method according to any one of the preceding claims.

According to one embodiment, the computer system is configured as a mobile device comprising a touch-screen as input means. For instance, such a computer system may be a smartphone or a tablet computer.

The invention also pertains to a computer programme product comprising programme code which is stored on a machine-readable medium, or being embodied by an electromagnetic wave comprising a programme code segment, and having computer-executable instructions for performing the method according to the invention, in particular when run on a computer system according to the invention.

The invention in the following will be described in detail by referring to exemplary embodiments that are accompanied by figures, in which:
- Fig. 1: shows a visualization of an environment comprising a detailed 3D model of a refinery complex as an example of a very large structure;
- Figs. 2a-c: show three views on the 3D model from slightly different viewpoints;
- Fig. 3: illustrates, in a 2D top view, a covering of the extent of a 3D model of a structure by a multitude of overlapping cubic elements;
- Figs. 4a-b: show, in a 2D top view, an exemplary embodiment of a cubic horizon element, without and with neighbouring overlapping horizon elements;
- Figs. 5a-b: illustrate a cubic horizon element in a 3D view from a viewpoint within the element;
- Figs. 6a-c: illustrate changing the horizon element by advancing the reaching the boundary of a movement space;
- Fig. 7: illustrates a first embodiment of a cubic horizon element, wherein the horizon is visualized using a cube map;
- Fig. 8: illustrates a second embodiment of a cubic horizon element, wherein the horizon is visualized using a point cloud; and
- Fig. 9: illustrates an octree level-of-detail distribution in a point cloud.

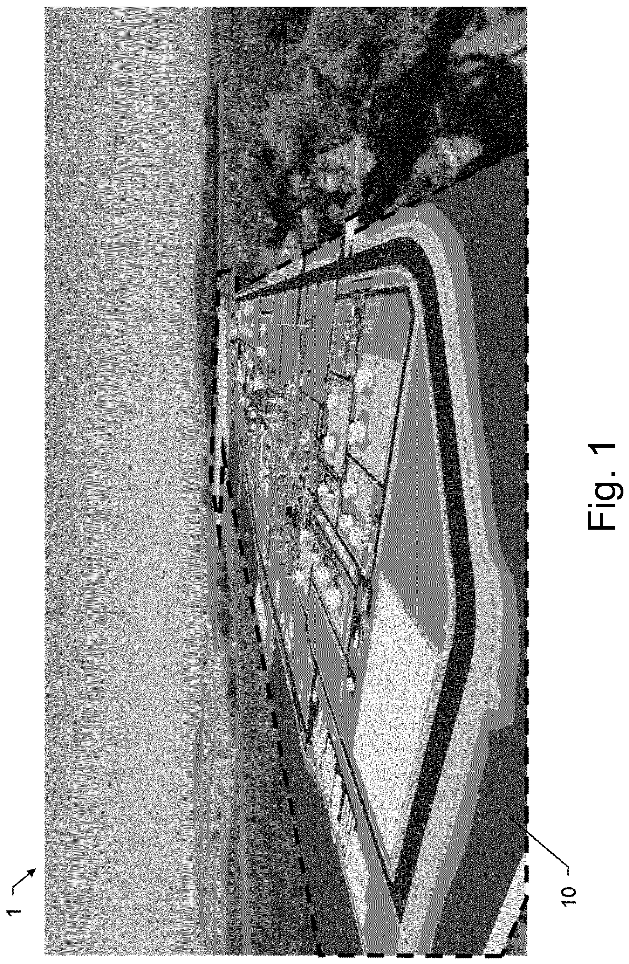

Figure 1 shows a three-dimensional (3D) environment 1 with a 3D model 10 of a refinery complex as an example of a very large structure. The structure comprises a very large number of features that need to be visualized in detail to a user. In the given example, the features comprise a huge number of different pipes, valves and other substructures that are provided all over the structure.

In some solutions known in the art, the background landscape comprising hills and trees would be visualized using a classical cube map, i.e. without any depth and meta information. The present invention provides enhanced solutions for visualizing the model 10 of the structure in such a way that a user is enabled to move a viewpoint freely through the model 10 whereby at every viewpoint nearby features are visualized in high detail and all other features of the structure that would be visible from the viewpoint are also visible in the visualization of the structure's model 10 and shown with realistic depth information.

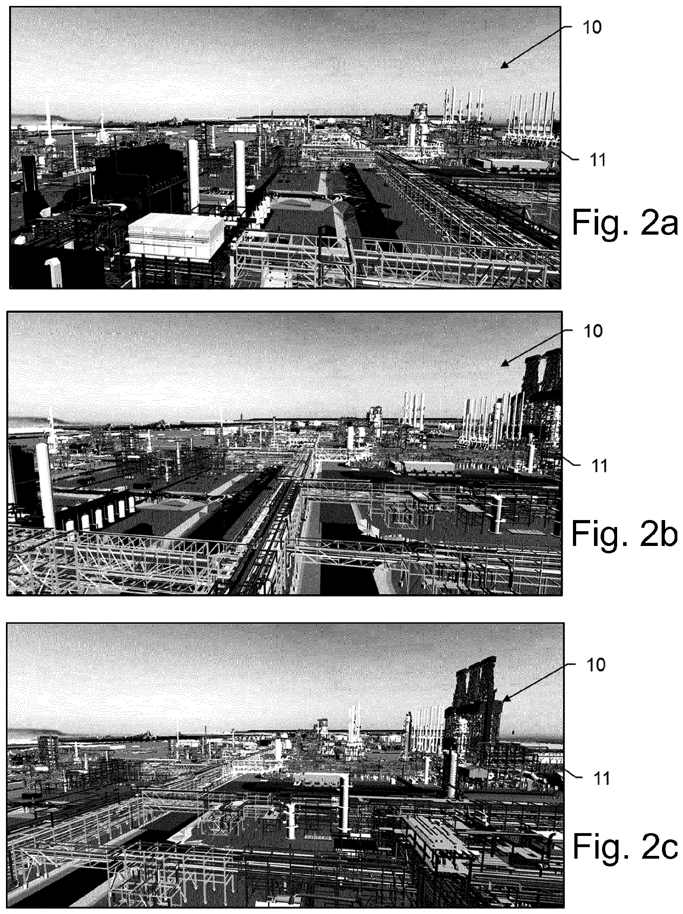

In Figures 2a, 2b and 2c, three exemplary views 11 on the 3D model 10 of Figure 1 are depicted from slightly different viewpoints, i.e. from three positions of the virtual camera that have been changed in response to a corresponding user input. The viewpoint of Figure 2a is positioned inside the model 10, slightly elevated over the nearby features.

The user, wanting to change the viewpoint by moving it to the right, uses input means of the displaying device to perform the movement, for instance using arrow keys on a keyboard or a swiping gesture on a touchscreen. This input results in a continuous seamless change of the view 11 on the model 10, with a multitude of views in between a start and end of the movement. Figure 2b is an example of such an intermediate view 11. Figure 2c shows the user's new choice of view 11 on the model 10 after the movement of the viewpoint has come to a halt.

Although in this simplified example only a movement into one direction has been illustrated, the disclosed invention of course allows lateral movements in three degrees of freedom, i.e. forward/backward, up/down and right/left. In addition, rotary motions in up to three degrees of freedom are allowed, including at least yawing and optionally pitching and rolling motions. It has to be understood that for illustration purposes, a large number of intermediate viewpoints have been left out in the translation between Figures 2a, 2b and 2c, the shown translation is thus much larger than that between two neighbouring viewpoints. Nonetheless, the user may be enabled to perform jumps between specific non-neighbouring viewpoints.

Movement commands can be given by the user through any input device that is supported by the visualization application and the device or technology on which it runs. Typical input devices comprise mouse and keyboard on desktop computers, and gestures on touch-sensitive devices such as tablets and smartphones. On virtual reality devices such as Oculus, the compatible controllers and movement sensors serve as input devices. For instance, automated virtual camera flight paths can be used when running the visualization application, and position and orientation changes generated by augmented reality (AR), virtual reality (VR) or extended reality (XR) applications can be used as movement commands.

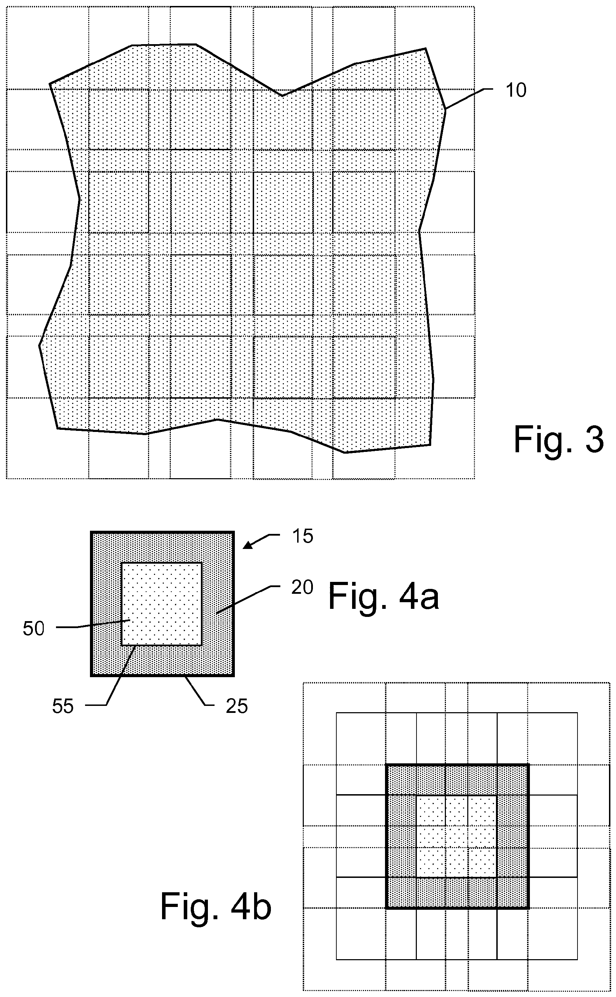

Figure 3 illustrates an example for the technique used to allow such free movement. The 3D model 10 is shown from above for illustration purposes and thus appears as 2D. A multitude of overlapping cubic elements (appearing as squares) are distributed over the area of the model 10 so that all parts of the model are covered. The horizon objects do not necessarily have to be cubical, although this form provides certain advantages. For instance, hexagonal or spherical horizon objects may be used instead.

Optionally, a multitude of anchor viewpoints may be defined within the 3D model wherein one virtual three-dimensional horizon object is then created around each of these anchor viewpoints. For instance, the horizon objects can be created with the anchor viewpoints being their centre points.

In some embodiments, the solution of the present application comprises pre-rendering a cube map for colour, depth, normal-vectors and light information. The cube map colour is rendered into a framebuffer, and a cube map normal-vector is rendered together with lighting information into a lighting buffer. Depth from the cube map is used to recreate 3D locations of the environment in order to allow the viewpoint to be moved away from the centre of the cube map. Viewpoint (or camera) movement causes the parallax effect to become visible because environment far away from the viewpoint moves slower than environment close to camera. Optionally, the runtime environment receives dynamic lighting and is thus not shown as it was during pre-render.

A grid of horizon objects with cube maps and/or point clouds is rendered and new horizon objects are loaded when the viewpoint approaches its 3D location. The transition between horizon objects is seamless, although a sudden change in the parallax effect may happen.

Figure 4a shows one of the cubic elements 15 of Figure 3. The elements are used for visualizing details of the model that are far away, i.e. the horizon of a present viewpoint. They are therefore termed "horizon objects" in this document. Said cubic horizon object 15 comprises an inner space 20 which - in the shown example but not necessarily - comprises the entire inside of the horizon object 15. A movement space 50 is provided inside the inner space and defined by a movement boundary 55. The movement space 50 is smaller than the inner space 20.

Using these horizon objects 15, advantageously any amount of details can be presented without loss of performance in the runtime-renderer. The horizon objects 15 comprise either a 3D cube map or a point cloud to display the horizon of the 3D scene, including distant parts of the visualized model.

Each horizon object has a 3D inner space 20, which particularly is a cubical space. The inner space 20 is reserved for high detail display of scene objects, i.e. nearby features of the visualized model. Preferably, cube map or point cloud do not display anything in the inner space. This means that even if the point cloud has points in this inner space 20, these will not be displayed.

In the inner space 20, details of the model are displayed that are close to a present viewpoint, since the viewpoint never leaves the movement space 50, which is smaller than the inner space 20 that encloses and comprises the movement space 50 (every point of the movement space 50 being also a point of the inner space 20). The details may comprise 3D features in a high level of detail, e. g. 3D representations of pipes, valves and other features of the structure. The features may be visualized as a polygon geometry.

The method is designed so that no noticeable glitches appear when if the viewpoint crosses the movement border 55. If the system is slow, lags may happen in the streaming of the cube maps when the next horizon object 15 is not yet ready when the viewpoint passes over the movement border 55. The size of horizon objects 15 and their movement spaces 50 should thus be tuned based on the calculation speed of the used computer system and on a desired speed of the viewpoint change. The faster the viewpoint is supposed to move, the larger should horizon objects 15 and their movement spaces 50 be.

A system according to the present invention comprises using a multitude of horizon objects 15 to achieve the goal of keeping the rendering performance stable in a visualization application. The idea comprises dividing the rendered data into two spaces, i.e. the inner space 20 of the present horizon object 15, and the outer space, i.e. the rest of the virtual world. In the outer space, a representation of distant features is displayed, i.e. of those features of the 3D model that are not positioned in the inner space 20 of the current horizon object 15. The representation of the outer space can be displayed using a 3D cube map or point cloud.

Rendering of the outer space can be implemented using different types of technology. Some embodiments of the invention comprise using 3D cube-map technology, wherein each for each horizon object 15 comprises a cube map. Some embodiments comprise using a point cloud system with one point cloud that covers the data of the entire outer space. In particular, those point cloud systems can be used that are optimized with an octree and thus already have an optimal spatial distribution. Such a point cloud system, that is described, for instance, in EP 2 947 630 A1, has been identified as a possible alternative for a cube map solution to realise the outer space visualisation. In this case, a single point-cloud covers the entire outer space for the entire multitude of horizon objects.

Since the visualization of the far-away features of the outer space can be realised in different ways, this application describes using the concept of the horizon objects 15 (with their inner space for visualizing nearby features) together with both of the per-se known concepts mentioned above, i.e. the cube-map and point-cloud technologies.

For instance, an exemplary horizon object 15 might cover a part of the model that corresponds to a cubic space with a side length of 300 metres in the real structure. The side length of the inner space 20 then might be either also 300 metres or less than 300 metres, e.g. in the range of 50 to 200 metres. The movement space 50 preferably covers between 25% and 50% of the inner space 20. The larger the horizon objects are and the larger the movement space 50 is in relation to the size of the horizon object 15, the fewer horizon objects need to be generated.

The movement space 50 is that space in which a viewpoint can be moved, i.e. by a user, without changing the visualized content. If the viewpoint approaches the movement boundary 55, the visualized horizon element 15 is changed. Since the horizon elements 15 are arranged overlapping (see Figure 3) so that the movement areas overlap each other or are directly neighbouring each other, the new viewpoint will be within the movement area of the new horizon element and the user will not be able to notice any difference.

Known solutions using cube mapping do not allow the viewpoint to be moved away from a centre of the cube. To allow this free movement, the present invention makes use of the "parallax effect" to display the cube-map pixels in their correct 3D position. To do so, depth and lighting information are combined in order to create a real depth in the outer space 30. This results in the same visual quality for the user that would have resulted from rendering the entire 3D model in full detail. By using the parallax effect and rendering only the most nearby features, i.e. those of the inner space 20, in full detail, the rendering performance is kept high and stable.

A cube map has six faces, each face showing an image which is an array comprising colour, depth, normal vectors and lighting information. Each element in the array is referred to as a cube-map pixel. Each of these pixels may comprise the following data:
1. Colour, e.g. stored as red, green and blue colour information;
2. Depth, e.g. stored as a value between 0.0 and 1.0;
3. Normal-vector, e.g. stored as a 3D vector in unit space, where the length of its x, y and z components is always 1.0; and
4. Lighting information providing information regarding a reflection of the pixel (i.e. how shiny the pixel is).

The cube-map pixels are calculated from the 3D model using a pre-rendering process. In one embodiment of this process, the entire 3D model is loaded, preferably into a powerful machine with a high-end graphics acceleration card. The pre-rendering process will loop through the entire grid of cube maps and place the 3D camera at the centre of each cube map. For each centre, the pre-rendering process will render the entire scene up to six times, once for every face of the cube map. The scene is rendered without dynamic lighting, but with lighting information. Preferably, the colours have their full brightness in order to allow the runtime renderer to apply lighting effects for both day and night.

The rendered images are transferred from the graphics memory into the system memory; the information needed for the cube map is extracted from the images and stored in a cube-map file format.

Distributing the horizon objects over the scene may be performed as a fully or semi-automated process. In a semi-automated process, a user decides what the horizon-object grid shall cover. A decision is made regarding size of horizon objects. This defines how many horizon objects the grid will contain. Multiple grids may be configured having different object sizes. For instance, in a simple example, horizon objects closer to a landscape ground may be smaller than horizon objects further up in the air.

Also, if the 3D model comprises outdoor and indoor parts, wherein the indoor parts comprise features inside larger 3D features of the model such as buildings, generating the horizon objects optionally may comprise generating outdoor horizon objects for the outdoor parts and indoor horizon objects for the indoor parts independently from another, i.e. with different horizon objects sizes for the outdoor and indoor parts.

When the grid information is ready, then the automated process starts, e.g. with the pre-rendering process looping through the horizon objects in each grid, rendering each face of each object's cube map.

The main advantage of using the described horizon object system is that 3D geometry that shall be visualized in the runtime-renderer application can be limited to the inner space 20 of the presently visualized horizon object. This means that, although the complete extensive scene will be displayed at any given time, only a small fraction of the scene has to be provided by the runtime renderer to the graphics-processing unit (GPU). Performance will thus be quite unaffected when further content is added to a scene.

Figure 4b shows the horizon object 15 of Figure 4a together with neighbouring horizon objects that overlap each other to a certain degree, thus allowing switching from one horizon object to the other without noticeable effects. In the shown example, the movement spaces of the neighbouring horizon objects are adjacent to each other, so that they form a grid of movement spaces. Alternatively, the horizon objects can be positioned so that also the movement spaces overlap each other to a certain degree.

The sizes of the horizon objects 15 need not be homogenous. The size of each horizon object 15 may be chosen to comprise a certain amount of model features to be displayed in the inner space 20 in order to ensure a uniform visualization performance for all parts of the model. For instance, in the case of a refinery complex, horizon objects 15 in higher layers, i.e. layers of horizon objects that are farther away from the ground, especially if less features are to be expected there, may be larger than at a ground layer of horizon objects 15. For other structure examples, such as complex mechanical machines or ships, the distribution of detail depth across the rendered volume may be different, so that a different distribution of horizon objects may be advantageous. Horizon objects 15 showing the insides of buildings or other structures may be smaller than those showing outside landscapes. The size can also be adapted to the size of an inside room.

If the overlapping of horizon objects 15 is so that more than two movement spaces 50 comprise a viewpoint, the selection of which new horizon object should be displayed next, may depend on a present movement direction or an expected movement direction of the viewpoint or on other viewpoint-, model- or user-related factors.

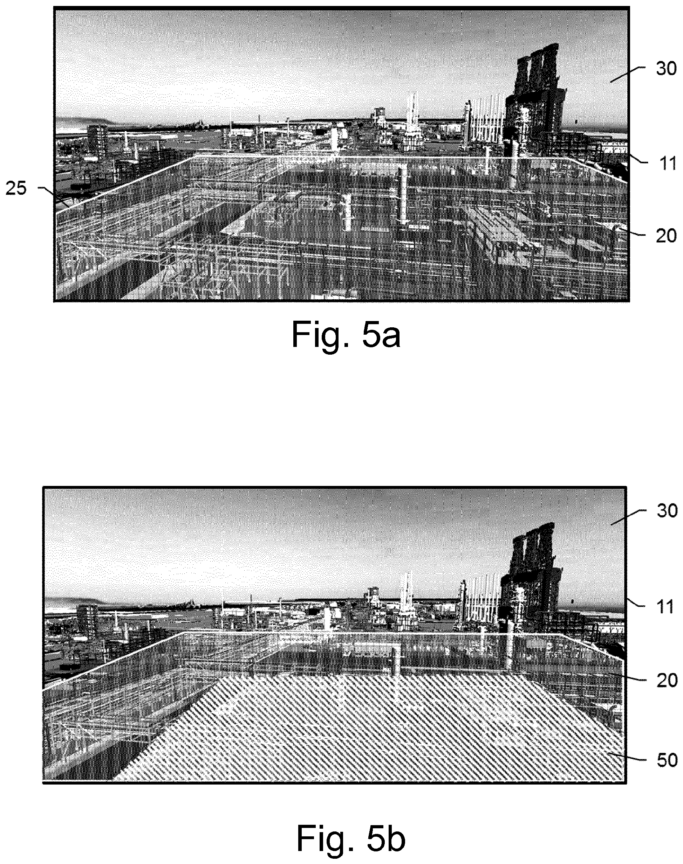

Figures 5a and 5b illustrate, using the view 11 of Figure 3c, the different parts of an exemplary horizon object. Figure 5a shows the inner space 20, in which nearby 3D features of the model, in this case representations of pipes, valves and other features of the refinery complex, are positioned. The inner space can be cubicle and is defined by the boundary 25 between the inner space 20 and an outer space 30. The boundary 25 can be the boundary of the horizon object 15 or be inside the horizon object 15. In the outer space 30, faraway features of the model and the surrounding landscape including the horizon are visualized using cube mapping with added depth information.

In Figure 5b, additionally, the movement space 50 is depicted, in which a viewpoint can be moved freely without changing the present horizon object. The movement space 50 can be cubicle, too. It is surrounded completely by the inner space 20 so that 3D features are always visualized within a certain distance around each possible viewpoint of the movement space 50.

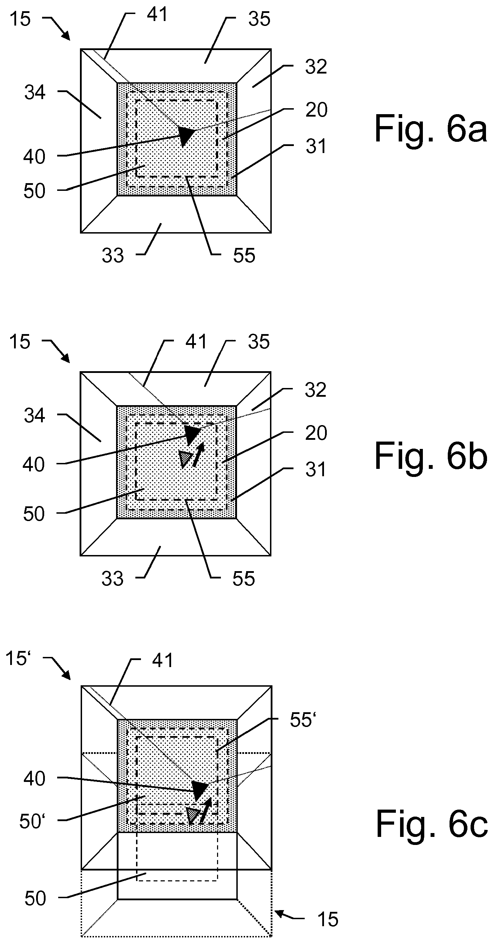

Approaching or passing the boundary of the movement space 50 triggers visualizing a neighbouring horizon object, wherein the new viewpoint is then positioned in the movement space of that horizon object. This change to a different horizon object occurs without a noticeable effect to the user, since the representations of the features as well as the cube-map features maintain their relative positions also in the new horizon object. This is illustrated in Figures 6a, 6b and 6c, where a first horizon object 15 is shown in a top view. It comprises a movement space 50 that has a movement boundary 55 and an inner space 20, which encloses the movement space 50, for visualizing nearby parts of the 3D model. In the example of Figures 6a-c, in contrast to Figures 4a-b, the inner space 20 is slightly smaller than the horizon object 15. The horizon element 15 in its outer space comprises a cube map with six sides (only five sides 31-35 visible here) for visualizing distant parts of the 3D model.

In Figure 6a, the horizon object 15 provides a view 41 on a part of the model from a viewpoint 40 that is situated inside the movement space to a user. The view 41 comprises details of nearby features in the inner space 20 and a background and horizon view on three sides 31, 32, 35 of the cube map.

The view 41 displays 3D meshes in the volume covered by the inner space 20. The volume outside the inner space will only show pixels from the cube map in their 3D position. So the three sides 31, 32, 35 of the cube map are converted from the cube map 2D to the shown scene in 3D.

In Figure 6b, the user has changed the viewpoint 40 by moving it forward. The view 41 comprises a slightly different part of the model. The viewpoint 40 is still in the movement space 50 and has not reached the movement boundary 55, so that still the view 41 is visualized to the user using the same horizon object 15.

In Figure 6c, the user has changed the viewpoint 40 again by moving it further forward. Since the viewpoint 40 has crossed the movement boundary 55, a second horizon object 15' is visualized instead of the first, the second horizon object 15' comprising the same components. The new viewpoint 40 is inside the movement space 50' of the new horizon object 15'. The view 41 presented to the user shows nearby features in the inner space of the new horizon object 15' and a background and horizon view on three sides of the new horizon object's cube map.

In one embodiment the transition between horizon objects 15, 15' may comprise the following steps. When the viewpoint 40 (i.e. the 3D camera) moves into the movement space 50' of the next horizon object 15', the following happens:
1. the new horizon object 15' is loaded;
2. the new horizon object 15' is turned visible;
3. the old horizon object 15 is turned invisible;
4. the inner space 20 is redefined to belong to the newly activated horizon object 15'; and
5. the 3D meshes rendered are now clipped to only show details inside the new inner space 20.

To allow a smooth transition, and depending on the system hardware, loading of the new horizon object 15' preferably may start already before the transition, i.e. a while before the viewpoint 40 actually reaches the movement boundary 55., For instance, all neighbouring horizon objects of a present horizon object 15 may be loaded to have them available. Alternatively, only the most likely candidate or candidates for the next horizon object 15' to be presented are loaded. The most likely candidate or candidates may be determined continuously, e.g. based on a present position and/or movement direction of the viewpoint 40.

Since the most nearby features were already visualized as features in the inner space 20 of the first horizon object 15 and since the other nearby features were visualized as background with depth and lighting information in its cube map 31-35, advantageously, the user might not even notice the change between the two horizon objects 15, 15'.

Each horizon object 15, 15' is defined at least by its centre point 3D position by and a size of its inner space 20. The position of the centre point relative to the 3D model and a distance from the centre point to the boundaries of the inner space are stored as metadata for each horizon object. Optionally, also a distance from the centre point to a horizon point can be stored as metadata, the horizon point being related to the extension of the 3D model 10, e. g. representing the most remote point of the model.

The depth of each pixel in the horizon object may be given by a distance value of 0.0 to 1.0, a value of 0.0 meaning that the pixel is as close to horizon object centre as it can be (which is defined by inner space size), and a value of 1.0 meaning that the pixel is as far away as it can be. The distance value is stored as metadata together with the horizon object grid system.

In order to determine a feature's 3D position, the runtime system will do the following: The screen pixel position is projected onto a cube map with the size of the inner space. This projection results in a 3D texture coordinate that is a standard lookup coordinate for cube map textures on the graphics processor. The screen pixel position is then projected onto a cube map with the size of the maximum distance. This projection results in another 3D texture coordinate. In a special case, where the viewpoint is located exactly at the centre of the cube map, then these two 3D texture coordinates will be identical, if not, then the two 3D texture coordinates will be different.

The graphics processor then runs a loop from the first 3D texture coordinate and interpolate linearly to the second 3D texture coordinate. The loop comprises the following steps:
1. the depth is read from the cube map texture at the current 3D texture coordinate;
2. the direction from the cube map centre toward the current 3D texture coordinate is multiplied with the depth, in order to get a 3D position relative to the cube map centre;
3. the relative position is added to the cube map centre position, and the current viewpoint position is subtracted.

The result is a 3D position that is relative to the current viewpoint position. The viewpoint relative position is now normalized into a viewpoint relative direction vector. The viewpoint relative direction vector is compared to the direction of the current screen pixel seen as a relative direction from the viewpoint.

The result is an angle. The better the direction seen through the screen pixel does aligns with the direction toward the cube map pixel, the smaller is this angle. Comparisons between loop iterations are done, and the smallest angle is remembered as best candidate. If the best candidate's angle is low enough, then it qualifies as visible. If it does not qualify as visible, it is discarded.

Inner space 20 and movement space 50 do not necessarily have to be cubical. Other forms, e.g. hexagonal or spherical forms, may be used instead.

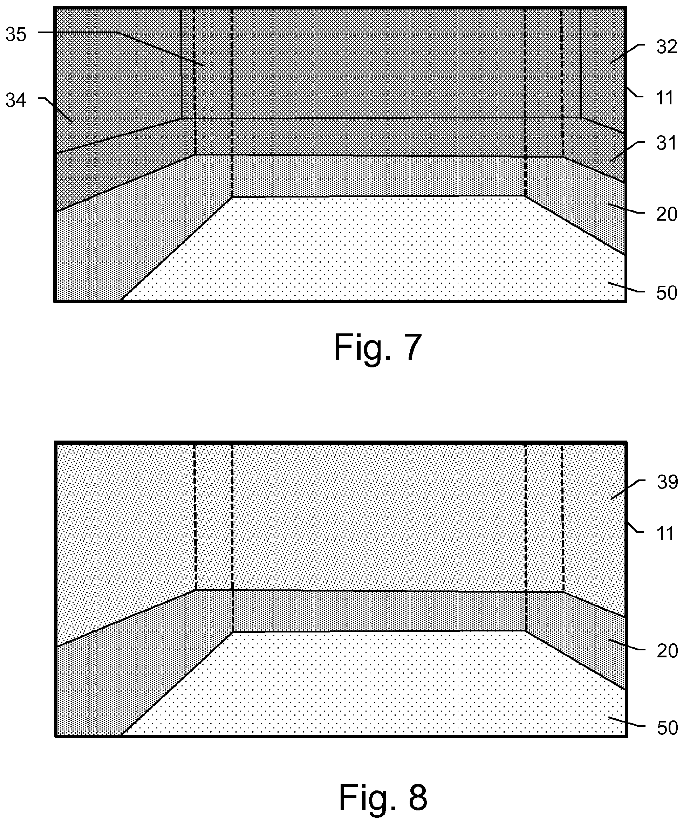

In Figure 7, a first embodiment of a cubic horizon object is shown, wherein the horizon is visualized in the outer space of the object using a cube map having six sides (four sides (31, 32, 34, 35) are visible here). Cube mapping is used to pre-render a background of a three-dimensional scene. Depth is added to the pre-rendered scene by creating and supplying a depth buffer for each cube-mapped image. The depth buffer defines depths of different objects depicted in the cube map. The resulting depth information supplied to a panoramically-composited cube map provides a complex interactive visual scene with a high degree of 3D realism.

In this embodiment, the horizon object requires preprocessing in order to pre-generate a special variant of a cube map. A cube map is a 3D object with six shaped surfaces 31, 32, 34, 35 forming a cube. The classic cube map can display an image on each of these sides, and can be used to display a 2D horizon around a camera in a runtime rendering application. The horizon cube map is extended to contain depth information per image colour element in order to display a 3D horizon around the runtime-rendering camera. The horizon cube map system optionally will also hold lighting properties per image colour element in order to allow the runtime rendering application to apply lighting effects onto the visual features inside the 3D horizon object. The 2D "wall" in the background thus moves with a changing viewpoint as if it were a 3D-rendered environment.

Using colour (e.g. RGB colour) and depth information for the distant features, their 3D positions are recreated in 2D images so that they are visualized without any visible transition to the nearby features of the inner space 20. Nearby features in the inner space 20 (e. g. polygon geometries) will superimpose the cube-map image.

Large features may be visualized partially as 3D features in the inner space 20 and partially in the cube map. A user may select a nearby feature to highlight it and to obtain further information about it, e.g. data about a size, age, manufacturer etc. A feature identifier may be added to all distant features or only to those that are large enough to be partially visualized as selectable 3D features. Then, advantageously, also the distant parts of a selected nearby feature may be highlighted together with the nearby feature, showing the user the complete extent of that feature and not only the nearby parts.

In some embodiments, artificial dynamic light sources can be superimposed over the cube map. Surfaces and normal are used as parameters in the cube maps, so that lights can be overlaid over the cube maps and realistic reflections in the cube maps are possible without having to alter the cube maps, so that the same cube maps can be used for day and night views.

The light sources may be natural light sources (e.g. sun and moon) and real light sources of the structure, such as lamps. Information about their position and lighting parameters (e.g. brightness, directions, colour) may then be taken from CAD data of the 3D model. The light sources e.g. may be volumetric lights that are auto-generated from parametric data and shadows. That way, realistic night views on the model are possible.

Also, special effects such as for instance smoke particle effects and animated entities such as drones, robots and vehicles can be visualized moving in a scene. These can also be rendered into the screen buffer in correct 3D in the horizon object. The 3D scene then is rendered only inside the inner space 20, while the horizon object shows pixels from boundary of 20 and all the way out to the far-clip plane. Animated entities and special effects will also be rendered with correct pixel occlusion both inside the inner space 20 and outside of it.

The runtime-rendering application loads the horizon cube maps and displays the content through a rendering process with the following steps:
1. A graphics processing unit takes a cube-map geometry as input, including the image textures to which colour, depth and lighting information have been added;
2. rasterization is done when the cube-map geometry is interpolated into one fragment per pixel to be displayed in the 2D screen representation of the 3D environment;
3. each fragment performs a ray march through the cube-map depth information in order to generate a parallax effect which recreates the 3D position of the cube-map element from the 2D position of the cube-map geometry;
4. the result from the ray-march is used to do a colour- and lighting-information lookup from the cube-map textures;
5. the 3D position, colour and lighting information are processed by the runtime-lighting system in order to present a pixel on screen having the correct lighting and shadows.

Each horizon cube map comprises metadata describing:
1. The 3D world position of the 3D space centre of the cube-map;
2. the distance from the cube-map centre to the start of its 3D space, i.e. the cube-map's inner space;
3. the distance from the cube-map centre to the end of its 3D space (e. g. in case one wants to limit the space covered).

In order to allow the runtime 3D camera to move out of the inner space of the cube map, a multitude of horizon objects are pre-generated (see Figure 3). Thus, a grid of cube maps is created to cover the entire space in which the runtime-renderer camera is supposed to exist. The distribution of horizon objects in the grid may be two- or three-dimensional.

The parallax effect has some limitations due to foreground visual features inside the cube map that hides background visual shapes inside the cube map. The side effect of this becomes more visible the further the runtime renderer camera moves away from the centre of the cube map. One way to overcome this possible problem is to generate overlapping cube maps so that a new cube map comes into use before the runtime renderer camera moves too far away from the centre of the currently used cube map. The parallax side effect of the cube map can also be reduced by rendering two neighbouring cube maps at the same time. Each of the simultaneously rendered cube maps will then fill the parallax gaps of the other.

In Figure 8, a view 11 from a camera position within an alternative embodiment of a cubic horizon element is shown, wherein the horizon is visualized using a point cloud 39. In this point-cloud solution, the horizon object requires preprocessing in order to pre-generate point cloud data. The scene is sampled in full detail in order to generate a huge point cloud. Each point in the point cloud 39 comprises information about its 3D position in the scene, and the colour it represents. The colour may be stored without lighting (i.e. unlit) in order to support the runtime renderers lighting system. Optionally, the points of the point cloud can hold additional information such as the normal of the surface the point belongs to and also lighting information which might describe how shiny or reflective the point is. In particular, the point cloud 39 can hold the same data per point as the cube map of Figure 7 would hold per pixel.

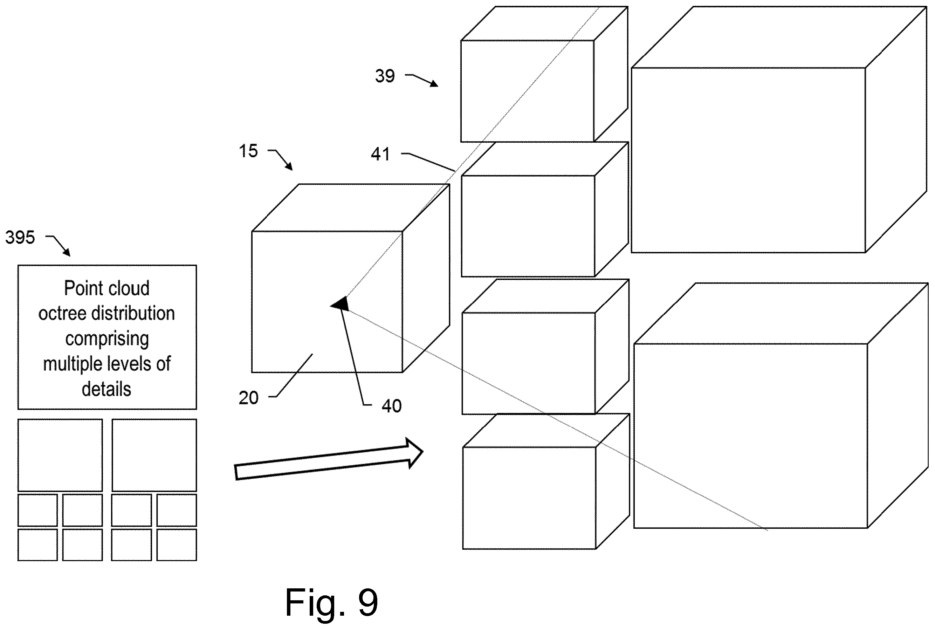

Figure 9 illustrates in a simplified way an octree level-of-detail distribution 395 in a point cloud 39. Such a distribution is advantageous in a point cloud that is used for visualizing far-away features in the outer space 30. How to realise such a distribution is generally known and described in greater detail, for instance, in the document EP 2 947 630 A1. The point cloud system can be used with only one instance because it is optimized with an octree distribution 395 and thus already has an optimal spatial distribution. The faraway features, i.e. those lying in the outer space, are visualized using a point cloud 39 having an octree distribution 395. Features that are closer to the inner space 20 of the horizon element 15 (smaller cubes) can thus be displayed with a higher point density. Far away features (larger cubes) can be visualized using a lower density. This is illustrated in a simplified way in the direction of the view 41 from the viewpoint 40.

An exemplary algorithm for rendering the horizon object 15 with a point-cloud 39 performs the following steps:
1. The point cloud renderer is modified in order to discard any point that falls in the inner space 20 of the horizon object;
2. the point cloud culling system is modified in order to achieve highest density of points at the border 25 of the inner space 20 of the horizon object - the density is reduced with increasing distance from the centre of the horizon object;
3. the lighting system uses the colour and position information of the points to apply light and shadows.

The point-cloud solution does not have the negative side effect of the cube-map-parallax solution. Point clouds however can have gaps in the displayed surfaces, especially when the density of points is too low. This problem can be reduced with a filter that visually closes gaps by combining colours surrounding a gap. If the point cloud 39 is dense enough, the density may be reduced for far away parts of the 3D model.

Alternatively, the horizon object can be rendered combining cube-map data and point-cloud technology, for instance loading data of a 3D cube map and rendering it like a point cloud. In this case, on those platforms that support texture lookup in vertex-shaders, cube maps are loaded as a texture only. The rendering will be done similarly as a point cloud, but instead of streaming points, texels (texture pixels) will be looked-up from the texture and each texel will be rendered as a point; this allows "instant point clouds". This solution still has the parallax side effect of the cube-map solution, but is faster than the needed ray-march. This solution does not have the side effects of the point-cloud solutions regarding details missing out due to streaming not being up to speed with current camera location.

Although the invention is illustrated above, partly with reference to some preferred embodiments, it must be understood that numerous modifications and combinations of different features of the embodiments can be made. All of these modifications lie within the scope of the appended claims.

## Claims

1. Computer-implemented method for visualizing a three-dimensional model (10) of a large structure, the structure comprising a large amount of features to be visualized, the method comprising
- generating a multitude of virtual three-dimensional horizon objects (15), wherein the horizon objects are positioned and sized so that each horizon object (15) overlaps with at least one neighbouring horizon object; and
- performing a rendering process for providing a visualization (11) of the model (10) from a multitude of viewpoints to a user and for enabling the user to move a current viewpoint (40) freely through the visualization of the model,
wherein each horizon object (15) comprises
- an inner space (20) surrounding a centre point;
- a movement space (50) inside the inner space (20), wherein the movement space is smaller than the inner space and wherein each movement space (50) overlaps with or adjoins a movement space of at least one neighbouring horizon object (15);
- metadata comprising at least a three-dimensional position of the centre point relative to the three-dimensional model (10) and a distance from the centre point to the boundaries (25) of the inner space (20); and
- model data related to features of the three-dimensional model (10), the model data comprising a three-dimensional geometry of nearby features, wherein nearby features are those features of the three-dimensional model that are positioned at least partially in the inner space (20) of the horizon object (15),
wherein the rendering process comprises:
- providing an input device for the user, allowing the user to select a current viewpoint (40) and to change the current viewpoint using the input device, particularly in six degrees of freedom;
- visualizing, for a first current viewpoint (40), a first horizon object (15) which movement space (50) comprises the first current viewpoint, wherein visualizing the first horizon object comprises
- rendering the three-dimensional geometry of nearby features; and
- using a three-dimensional cube map (31-35) or a three-dimensional point cloud (39) for displaying a three-dimensional representation of distant features, wherein distant features are those features of the three-dimensional model (10) that are not positioned in the inner space (20) of the first horizon object (15), wherein the cube map (31-35) at least comprises image textures with colour, lighting and depth information, and the point cloud (39) at least comprises coordinates and colour information for each point of the point cloud;
- monitoring whether the current viewpoint (40) is changed by the user in such a way that the current viewpoint reaches or passes a movement boundary (55) of the movement space (50) of the first horizon object (15), wherein, if the current viewpoint (40) reaches or passes the movement boundary (55), a second horizon object (15') is visualized, wherein the movement space (55') of the second horizon point comprises the current viewpoint,
wherein, if the three-dimensional cube map (31-35) is used for displaying the three-dimensional representation of distant features,
- a size of the horizon objects (15) is selected in dependence of a performance of a computer system used for performing the method, and/or
- the horizon objects (15) comprise an outer space (30) surrounding the inner space (20), wherein a size of the inner space (20) of the horizon objects (15) is selected in dependence of a performance of the computer system used for performing the method.

2. Method according to claim 1,
**characterized in that**
each horizon object (15) comprises a three-dimensional cube map (31-35) comprising image textures with colour, lighting and depth information, wherein the three-dimensional cube map (31-35) is used for displaying the representation of the distant features, wherein the rendering process comprises generating a parallax effect to recreate three-dimensional positions in the visualization of the horizon object from two-dimensional positions of the cube map (31-35).

3. Method according to claim 2,
**characterized in that**
the rendering process comprises
- performing rasterization to interpolate the three-dimensional geometry into one fragment per pixel to be displayed, and
- performing ray marching for each fragment using the depth information of the cube map, wherein generating the parallax effect is based on a result of the ray marching,
particularly wherein the rendering process further comprises
- adding colour information from the image textures, based on a result of the ray marching, and
- processing the three-dimensional positions, the colour information and the lighting information to display a pixel on a screen with correct light, shadow and colour.

4. Method according to claim 1,
**characterized in that**
a three-dimensional point cloud (39) is used for displaying the representation of the distant features, the point cloud comprising coordinates and colour information for each point of the point cloud, particularly wherein points of the point cloud (39) lying in the inner space (20) are not displayed.

5. Method according to claim 4,
**characterized in that**
the same point cloud (39) is used for the first and the second horizon object (15, 15'), particularly wherein the point cloud (39) comprises an octree level-of-detail distribution (395).

6. Method according to claim 4 or claim 5,
**characterized in that**
the three-dimensional point cloud (39) comprises texture information for each point of the point cloud, particularly wherein
- the points of the point cloud are texture pixels, and/or
- the texture information is derived from image textures of a three-dimensional cube map (31-35) of the horizon object.

7. Method according to any one of the preceding claims,
**characterized in that**
the three-dimensional horizon object (15) is cubical, wherein the inner space (20) and the movement space (50) are three-dimensional, particularly cubical.

8. Method according to any one of the preceding claims,
**characterized in that**
- horizon object data of a plurality of horizon objects (15) is stored in a data storage, the horizon object data comprising at least the three-dimensional cube map (30) or point cloud (39) and the metadata of each of the plurality of horizon objects; and
- the rendering process comprises loading the horizon object data of one or more of the plurality of horizon objects (15) from the data storage.

9. Method according to any one of the preceding claims,
**characterized in that**
the horizon objects (15) are positioned and sized depending on a distribution of features in the three-dimensional model (10), particularly to achieve or approximate an even distribution of the nearby features for every horizon object (15), particularly wherein the method comprises defining a multitude of anchor viewpoints within the three-dimensional model and generating one virtual three-dimensional horizon objects (15) for each anchor viewpoint, particularly wherein the centre point corresponds to the anchor viewpoint.

10. Method according to any one of the preceding claims,
**characterized in that**
the three-dimensional model (10) comprises outdoor and indoor parts, the indoor parts comprising features inside buildings or three-dimensional features of the model, wherein generating the horizon objects (15) comprises generating outdoor horizon objects for the outdoor parts and indoor horizon objects for the indoor parts.

11. Method according to any one of the preceding claims,
**characterized in that**
- a size of the movement space (50) of a first horizon object (15) is selected in dependence of distances to the neighbouring horizon objects (15'); and/or
- a form of the movement space (50) of a first horizon object (15) is selected in dependence of a spatial distribution of neighbouring horizon objects (15').

12. Method according to any one of the preceding claims,
**characterized in that**
- a size of the horizon objects (15) is selected in dependence of a performance of a computer system used for performing the method, and/or
- the horizon objects (15) comprise an outer space (30) surrounding the inner space (20), wherein a size of the inner space (20) of the horizon objects (15) is selected in dependence of a performance of the computer system used for performing the method, particularly wherein the absolute size of the inner space (20) or a size of the inner space (20) relative to a size of the respective horizon object (15) is selected,
in particular wherein the performance is at least partially a performance of a graphics processing unit of the computer system.

13. Computer system comprising a data storage, a graphics processing unit, input means and a display, wherein the computer system is configured for performing the method according to any one of the preceding claims.

14. Computer system (1) according to claim 13,
**characterized in that**
the computer system is configured as a mobile device comprising a touch-screen.

15. Computer programme product comprising programme code which is stored on a machine-readable medium, or being embodied by an electromagnetic wave comprising a programme code segment, and having computer-executable instructions for performing, in particular when run on a computer system according to claims 13 or 14, the method according to any one of claims 1 to 12.

## Patentansprüche

1. Computerimplementiertes Verfahren zum Visualisieren eines dreidimensionalen Modells (10) einer großen Struktur, wobei die Struktur eine große Menge von zu visualisierenden Merkmalen umfasst, wobei das Verfahren Folgendes umfasst:
- Erzeugen einer Mehrzahl virtueller dreidimensionaler Horizontobjekte (15), wobei die Horizontobjekte so positioniert und bemessen sind, dass jedes Horizontobjekt (15) mindestens ein benachbartes Horizontobjekt überlappt; und
- Durchführen eines Rendering-Prozesses, um einem Benutzer eine Visualisierung (11) des Modells (10) aus einer Mehrzahl von Blickpunkten bereitzustellen und es dem Benutzer zu ermöglichen, einen aktuellen Blickpunkt (40) frei durch die Visualisierung des Modells zu bewegen,
wobei jedes Horizontobjekt (15) Folgendes umfasst:
- einen Innenraum (20), der einen Mittelpunkt umgibt;
- einen Bewegungsraum (50) innerhalb des Innenraums (20), wobei der Bewegungsraum kleiner als der Innenraum ist und wobei jeder Bewegungsraum (50) einen Bewegungsraum mindestens eines benachbarten Horizontobjekts (15) überschneidet oder an diesen angrenzt;
- Metadaten, die mindestens eine dreidimensionale Position des Mittelpunkts relativ zu dem dreidimensionalen Modell (10) und einen Abstand von dem Mittelpunkt zu den Grenzen (25) des Innenraums (20) umfassen; und
- Modelldaten, die sich auf Merkmale des dreidimensionalen Modells (10) beziehen, wobei die Modelldaten eine dreidimensionale Geometrie nahegelegener Merkmale umfassen, wobei nahegelegene Merkmale diejenigen Merkmale des dreidimensionalen Modells sind, die mindestens teilweise in dem Innenraum (20) des Horizontobjekts (15) positioniert sind,
wobei der Rendering-Prozess Folgendes umfasst:
- Bereitstellen einer Eingabevorrichtung für den Benutzer, die es dem Benutzer ermöglicht, einen aktuellen Blickpunkt (40) auszuwählen und den aktuellen Blickpunkt unter Verwendung der Eingabevorrichtung zu ändern, insbesondere in sechs Freiheitsgraden;
- Visualisieren, für einen ersten aktuellen Blickpunkt (40), eines ersten Horizontobjekts (15), dessen Bewegungsraum (50) den ersten aktuellen Blickpunkt umfasst, wobei das Visualisieren des ersten Horizontobjekts Folgendes umfasst:
- Rendern der dreidimensionalen Geometrie nahegelegener Objekte; und
- Verwenden einer dreidimensionalen Cube Map (31-35) oder einer dreidimensionalen Punktwolke (39) zum Anzeigen einer dreidimensionalen Darstellung entfernter Merkmale, wobei entfernte Merkmale diejenigen Merkmale des dreidimensionalen Modells (10) sind, die nicht in dem Innenraum (20) des ersten Horizontobjekts (15) positioniert sind, wobei die Cube Map (31-35) mindestens Bildtexturen mit Farb-, Licht- und Tiefeninformationen umfasst und die Punktwolke (39) mindestens Koordinaten und Farbinformationen für jeden Punkt der Punktwolke umfasst;
- Überwachen, ob der aktuelle Blickpunkt (40) derart durch den Benutzer verändert wird, dass der aktuelle Blickpunkt eine Bewegungsgrenze (55) des Bewegungsraums (50) des ersten Horizontobjekts (15) erreicht oder überschreitet, wobei, wenn der aktuelle Blickpunkt (40) die Bewegungsgrenze (55) erreicht oder überschreitet, ein zweites Horizontobjekt (15') visualisiert wird, wobei der Bewegungsraum (55') des zweiten Horizontpunkts den aktuellen Blickpunkt umfasst,
wobei, wenn die dreidimensionale Cube Map (31-35) zum Anzeigen der dreidimensionalen Darstellung entfernter Merkmale verwendet wird,
- eine Größe der Horizontobjekte (15) in Abhängigkeit von einer Leistungsfähigkeit eines Computersystems, das zum Durchführen des Verfahrens verwendet wird, ausgewählt wird und/oder
- die Horizontobjekte (15) einen Außenraum (30), der den Innenraum (20) umgibt, aufweisen, wobei eine Größe des Innenraums (20) der Horizontobjekte (15) in Abhängigkeit von einer Leistungsfähigkeit des Computersystems, das zum Durchführen des Verfahrens verwendet wird, ausgewählt wird.

2. Verfahren nach Anspruch 1,
**dadurch gekennzeichnet, dass**
jedes Horizontobjekt (15) eine dreidimensionale Cube Map (31-35), umfassend Bildtexturen mit Farb-, Licht- und Tiefeninformationen, umfasst, wobei die dreidimensionale Cube Map (31-35) zum Anzeigen der Darstellung der entfernten Merkmale verwendet wird, wobei der Rendering-Prozess Erzeugen eines Parallaxeneffekts umfasst, um dreidimensionale Positionen in der Visualisierung des Horizontobjekts aus zweidimensionalen Positionen der Cube Map (31-35) nachzubilden.

3. Verfahren nach Anspruch 2,
**dadurch gekennzeichnet, dass**
der Rendering-Prozess Folgendes umfasst:
- Durchführen einer Rasterung, um die dreidimensionale Geometrie in ein Fragment pro anzuzeigendem Pixel zu interpolieren, und
- Durchführen eines Ray-Marchings für jedes Fragment unter Verwendung der Tiefeninformationen der Cube Map, wobei das Erzeugen des Parallaxeneffekts auf einem Ergebnis des Ray-Marchings basiert,
wobei der Rendering-Prozess insbesondere ferner Folgendes umfasst:
- Hinzufügen von Farbinformationen aus den Bildtexturen basierend auf einem Ergebnis des Ray-Marchings und
- Verarbeiten der dreidimensionalen Positionen, der Farbinformationen und der Lichtinformationen, um ein Pixel auf einem Bildschirm mit korrektem Licht, Schatten und korrekter Farbe anzuzeigen.

4. Verfahren nach Anspruch 1,
**dadurch gekennzeichnet, dass**
eine dreidimensionale Punktwolke (39) zum Anzeigen der Darstellung der entfernten Merkmale verwendet wird, wobei die Punktwolke Koordinaten und Farbinformationen für jeden Punkt der Punktwolke umfasst, wobei insbesondere Punkte der Punktwolke (39), die in dem Innenraum (20) liegen, nicht angezeigt werden.

5. Verfahren nach Anspruch 4,
**dadurch gekennzeichnet, dass**
die gleiche Punktwolke (39) für das erste und das zweite Horizontobjekt (15, 15') verwendet wird, wobei die Punktwolke (39) insbesondere eine Octree-Detailgrad-Verteilung (395) aufweist.

6. Verfahren nach Anspruch 4 oder Anspruch 5,
**dadurch gekennzeichnet, dass**
die dreidimensionale Punktwolke (39) Texturinformationen für jeden Punkt der Punktwolke umfasst, wobei insbesondere
- die Punkte der Punktwolke Texturpixel sind und/oder
- die Texturinformationen aus Bildtexturen einer dreidimensionalen Cube Map (31-35) des Horizontobjekts abgeleitet werden.

7. Verfahren nach einem der vorhergehenden Ansprüche,
**dadurch gekennzeichnet, dass**
das dreidimensionale Horizontobjekt (15) kubisch ist, wobei der Innenraum (20) und der Bewegungsraum (50) dreidimensional, insbesondere kubisch, sind.

8. Verfahren nach einem der vorhergehenden Ansprüche,
**dadurch gekennzeichnet, dass**
- Horizontobjektdaten einer Vielzahl von Horizontobjekten (15) in einem Datenspeicher gespeichert werden, wobei die Horizontobjektdaten mindestens die dreidimensionale Cube Map (30) oder die Punktwolke (39) und die Metadaten jedes der Vielzahl von Horizontobjekten umfassen; und
- der Rendering-Prozess Laden der Horizontobjektdaten von einem oder mehreren der Vielzahl von Horizontobjekten (15) aus dem Datenspeicher umfasst.

9. Verfahren nach einem der vorhergehenden Ansprüche,
**dadurch gekennzeichnet, dass**
die Horizontobjekte (15) in Abhängigkeit von einer Verteilung von Merkmalen in dem dreidimensionalen Modell (10) positioniert und bemessen werden, insbesondere um für jedes Horizontobjekt (15) eine gleichmäßige Verteilung der nahegelegenen Merkmale zu erreichen oder sich dieser anzunähern, wobei das Verfahren insbesondere Definieren einer Mehrzahl von Ankerblickpunkten innerhalb des dreidimensionalen Modells und Erzeugen eines virtuellen dreidimensionalen Horizontobjekts (15) für jeden Ankerblickpunkt umfasst, wobei insbesondere der Mittelpunkt dem Ankerblickpunkt entspricht.

10. Verfahren nach einem der vorhergehenden Ansprüche,
**dadurch gekennzeichnet, dass**
das dreidimensionale Modell (10) Außen- und Innenteile umfasst, wobei die Innenteile Merkmale innerhalb von Gebäuden oder dreidimensionale Merkmale des Modells umfassen, wobei das Erzeugen der Horizontobjekte (15) Erzeugen von Außenhorizontobjekten für die Außenteile und von Innenhorizontobjekten für die Innenteile umfasst.

11. Verfahren nach einem der vorhergehenden Ansprüche,
**dadurch gekennzeichnet, dass**
- eine Größe des Bewegungsraums (50) eines ersten Horizontobjekts (15) in Abhängigkeit von Abständen zu den benachbarten Horizontobjekten (15') ausgewählt wird; und/oder
- eine Form des Bewegungsraums (50) eines ersten Horizontobjekts (15) in Abhängigkeit von einer räumlichen Verteilung benachbarter Horizontobjekte (15') ausgewählt wird.

12. Verfahren nach einem der vorhergehenden Ansprüche,
**dadurch gekennzeichnet, dass**
- eine Größe der Horizontobjekte (15) in Abhängigkeit von einer Leistungsfähigkeit eines Computersystems, das zum Durchführen des Verfahrens verwendet wird, ausgewählt wird und/oder
- die Horizontobjekte (15) einen Außenraum (30), der den Innenraum (20) umgibt, umfassen, wobei eine Größe des Innenraums (20) der Horizontobjekte (15) in Abhängigkeit von einer Leistungsfähigkeit des Computersystems, das zum Durchführen des Verfahrens verwendet wird, ausgewählt wird, wobei insbesondere die absolute Größe des Innenraums (20) oder eine Größe des Innenraums (20) relativ zu einer Größe des jeweiligen Horizontobjekts (15) ausgewählt wird,
wobei insbesondere die Leistung mindestens teilweise eine Leistung einer Grafikverarbeitungseinheit des Computersystems ist.

13. Computersystem, umfassend einen Datenspeicher, eine Grafikverarbeitungseinheit, Eingabemittel und eine Anzeige, wobei das Computersystem dazu konfiguriert ist, das Verfahren nach einem der vorhergehenden Ansprüche durchzuführen.

14. Computersystem (1) nach Anspruch 13,
**dadurch gekennzeichnet, dass**
das Computersystem als eine mobile Vorrichtung, umfassend einen Touchscreen, konfiguriert ist.

15. Computerprogrammprodukt, umfassend Programmcode, der auf einem maschinenlesbaren Medium gespeichert ist, oder verkörpert durch eine elektromagnetische Welle, umfassend ein Programmcodesegment, und aufweisend computerausführbare Anweisungen zum Durchführen des Verfahrens nach einem der Ansprüche 1 bis 12, insbesondere wenn es auf einem Computersystem nach Anspruch 13 oder 14 läuft.

## Revendications

1. Procédé implémenté par ordinateur pour visualiser un modèle (10) tridimensionnel d'une grande structure, la structure comprenant une grande quantité de particularités à visualiser, le procédé comprenant
- la génération d'une multitude d'objets d'horizon (15) tridimensionnels virtuels, dans lequel les objets d'horizon sont positionnés et dimensionnés de telle sorte que chaque objet d'horizon (15) chevauche au moins un objet d'horizon voisin ; et
- la réalisation d'un processus de rendu pour fournir une visualisation (11) du modèle (10) à partir d'une multitude de points de vue à un utilisateur et pour permettre à l'utilisateur de mettre librement en mouvement un point de vue actuel (40) à travers la visualisation du modèle,
dans lequel chaque objet d'horizon (15) comprend
- un espace interne (20) entourant un point central ;
- un espace de mouvement (50) à l'intérieur de l'espace interne (20),
dans lequel l'espace de mouvement est plus petit que l'espace interne et dans lequel chaque espace de mouvement (50) chevauche ou est contigu à un espace de mouvement d'au moins un objet d'horizon (15) voisin ;
- des métadonnées comprenant au moins une position tridimensionnelle du point central par rapport au modèle (10) tridimensionnel et une distance entre le point central et les limites (25) de l'espace interne (20) ; et
- des données de modèle relatives à des particularités du modèle (10) tridimensionnel, les données de modèle comprenant une géométrie tridimensionnelle de particularités proches,
dans lequel des particularités proches sont ces particularités du modèle tridimensionnel qui sont positionnées au moins partiellement dans l'espace interne (20) de l'objet d'horizon (15),
dans lequel le processus de rendu comprend :
- la fourniture d'un dispositif d'entrée pour l'utilisateur, permettant à l'utilisateur de sélectionner un point de vue actuel (40) et de changer le point de vue actuel à l'aide du dispositif d'entrée, en particulier dans six degrés de liberté ;
- la visualisation, pour un premier point de vue actuel (40), d'un premier objet d'horizon (15) dont l'espace de mouvement (50) comprend le premier point de vue actuel, dans lequel
la visualisation du premier objet d'horizon comprend
- le rendu de la géométrie tridimensionnelle des particularités proches ; et
- l'utilisation d'une carte cubique (31 à 35) tridimensionnelle ou d'un nuage de points (39) tridimensionnel pour afficher une représentation tridimensionnelle de particularités éloignées, les particularités éloignées étant ces particularités du modèle (10) tridimensionnel qui ne sont pas positionnées dans l'espace interne (20) du premier objet d'horizon (15), dans lequel la carte cubique (31 à 35) comprend au moins des textures d'image avec des informations de couleur, d'éclairage et de profondeur, et le nuage de points (39) comprend au moins des informations de coordonnées et de couleur pour chaque point du nuage de points ;
- le fait de surveiller si le point de vue actuel (40) est changé par l'utilisateur de telle sorte que le point de vue actuel atteint ou dépasse une limite de mouvement (55) de l'espace de mouvement (50) du premier objet d'horizon (15), dans lequel, si le point de vue actuel (40) atteint ou dépasse la limite de mouvement (55), un deuxième objet d'horizon (15') est visualisé, dans lequel l'espace de mouvement (55') du deuxième point d'horizon comprend le point de vue actuel,
dans lequel, si la carte cubique (31 à 35) tridimensionnelle est utilisée pour afficher la représentation tridimensionnelle de particularités éloignées,
- une taille des objets d'horizon (15) est sélectionnée en fonction d'une performance d'un système informatique utilisé pour réaliser le procédé, et/ou
- les objets d'horizon (15) comprennent un espace externe (30) entourant l'espace interne (20), dans lequel une taille de l'espace interne (20) des objets d'horizon (15) est sélectionnée en fonction d'une performance du système informatique utilisé pour réaliser le procédé.

2. Procédé selon la revendication 1,
**caractérisé en ce que**
chaque objet d'horizon (15) comprend une carte cubique (31 à 35) tridimensionnelle comprenant des textures d'image avec des informations de couleur, d'éclairage et de profondeur, dans lequel la carte cubique (31 à 35) tridimensionnelle est utilisée pour afficher la représentation des particularités éloignées, dans lequel le processus de rendu comprend la génération d'un effet de parallaxe pour recréer des positions tridimensionnelles dans la visualisation de l'objet d'horizon à partir de positions bidimensionnelles de la carte cubique (31 à 35).

3. Procédé selon la revendication 2,
**caractérisé en ce que**
le processus de rendu comprend
- la réalisation d'une rastérisation pour interpoler la géométrie tridimensionnelle en un fragment par pixel à afficher, et
- la réalisation d'un lancer de rayon progressif pour chaque fragment en utilisant les informations de profondeur de la carte cubique, dans lequel la génération de l'effet de parallaxe est basée sur un résultat du lancer de rayon progressif,
en particulier dans lequel le processus de rendu comprend en outre
- l'ajout d'informations de couleur provenant des textures d'image, sur la base d'un résultat du lancer de rayon progressif, et
- le traitement des positions tridimensionnelles, des informations de couleur et des informations d'éclairage pour afficher un pixel sur un écran avec une lumière, une ombre et une couleur correctes.

4. Procédé selon la revendication 1,
**caractérisé en ce que**
un nuage de points (39) tridimensionnel est utilisé pour afficher la représentation des particularités éloignées,
le nuage de points comprenant des informations de coordonnées et de couleur pour chaque point du nuage de points,
en particulier dans lequel des points du nuage de points (39) situés dans l'espace interne (20) ne sont pas affichés.

5. Procédé selon la revendication 4,
**caractérisé en ce que**
le même nuage de points (39) est utilisé pour le premier et le deuxième objet d'horizon (15, 15'), en particulier dans lequel le nuage de points (39) comprend une distribution de niveau de détail d'arbre octaire (395).

6. Procédé selon la revendication 4 ou la revendication 5,
**caractérisé en ce que**
le nuage de points (39) tridimensionnel comprend des informations de texture pour chaque point du nuage de points,
en particulier dans lequel
- les points du nuage de points sont des pixels de texture, et/ou
- les informations de texture sont dérivées de textures d'image d'une carte cubique (31 à 35) tridimensionnelle de l'objet d'horizon.

7. Procédé selon l'une quelconque des revendications précédentes,
**caractérisé en ce que**
l'objet d'horizon (15) tridimensionnel est cubique, dans lequel l'espace interne (20) et l'espace de mouvement (50) sont tridimensionnels, en particulier cubiques.

8. Procédé selon l'une quelconque des revendications précédentes,
**caractérisé en ce que**
- des données d'objet d'horizon d'une pluralité d'objets d'horizon (15) sont stockées dans une mémoire de données, les données d'objet d'horizon comprenant au moins la carte cubique (30) tridimensionnelle ou le nuage de points (39) tridimensionnel et les métadonnées de chacun de la pluralité d'objets d'horizon ; et
- le processus de rendu comprend le chargement des données d'objet d'horizon d'un ou de plusieurs de la pluralité d'objets d'horizon (15) à partir de la mémoire de données.

9. Procédé selon l'une quelconque des revendications précédentes,
**caractérisé en ce que**
les objets d'horizon (15) sont positionnés et dimensionnés en fonction d'une distribution de particularités dans le modèle (10) tridimensionnel, en particulier pour obtenir ou approximer une distribution uniforme des particularités proches pour chaque objet d'horizon (15), en particulier dans lequel le procédé comprend la définition d'une multitude de points de vue d'ancrage au sein du modèle tridimensionnel et la génération d'un objet d'horizon (15) tridimensionnel virtuel pour chaque point de vue d'ancrage, en particulier dans lequel le point central correspond au point de vue d'ancrage.

10. Procédé selon l'une quelconque des revendications précédentes,
**caractérisé en ce que**
le modèle (10) tridimensionnel comprend des parties extérieures et intérieures, les parties intérieures comprenant des particularités à l'intérieur de bâtiments ou des particularités tridimensionnelles du modèle, dans lequel la génération des objets d'horizon (15) comprend la génération d'objets d'horizon extérieurs pour les parties extérieures et d'objets d'horizon intérieurs pour les parties intérieures.

11. Procédé selon l'une quelconque des revendications précédentes,
**caractérisé en ce que**
- une taille de l'espace de mouvement (50) d'un premier objet d'horizon (15) est sélectionnée en fonction de distances aux objets d'horizon voisins (15') ; et/ou
- une forme de l'espace de mouvement (50) d'un premier objet d'horizon (15) est sélectionnée en fonction d'une distribution spatiale d'objets d'horizon voisins (15').

12. Procédé selon l'une quelconque des revendications précédentes,
**caractérisé en ce que**
- une taille des objets d'horizon (15) est sélectionnée en fonction d'une performance d'un système informatique utilisé pour réaliser le procédé, et/ou
- les objets d'horizon (15) comprennent un espace externe (30) entourant l'espace interne (20), dans lequel une taille de l'espace interne (20) des objets d'horizon (15) est sélectionnée en fonction d'une performance du système informatique utilisé pour réaliser le procédé,
en particulier dans lequel la taille absolue de l'espace interne (20) ou une taille de l'espace interne (20) par rapport à une taille de l'objet d'horizon (15) respectif est sélectionnée,
en particulier dans lequel la performance est au moins partiellement une performance d'une unité de traitement graphique du système informatique.

13. Système informatique comprenant une mémoire de données, une unité de traitement graphique, des moyens d'entrée et un dispositif d'affichage, dans lequel le système informatique est configuré pour réaliser le procédé selon l'une quelconque des revendications précédentes.

14. Système informatique (1) selon la revendication 13,
**caractérisé en ce que**
le système informatique est configuré comme un dispositif mobile comprenant un écran tactile.

15. Produit-programme d'ordinateur comprenant un code de programme qui est stocké sur un support lisible par machine, ou qui est incarné par une onde électromagnétique comprenant un segment de code de programme, et ayant des instructions exécutables par ordinateur pour réaliser, en particulier lorsqu'il est exécuté sur un système informatique selon les revendications 13 ou 14, le procédé selon l'une quelconque des revendications 1 à 12.
